# FASCICULE DE BREVET EUROPEEN

(11) **EP 3 249 130 B1**
(45) Date de publication et mention de la délivrance du brevet: **15.04.2020**
(21) Numéro de dépôt: 17172369.5
(22) Date de dépôt: 23.05.2017
(51) Int. Cl.: E04D 3/08, A01G 9/14, E06B 3/263, E04D 3/28, E04C 2/54

(54) **PROFILÉ DE MONTAGE DE PLAQUES ALVÉOLAIRES EXTRUDÉES ET BAIE À DOUBLE PLAQUE ALVÉOLAIRE EXTRUDÉE**
MONTAGEPROFIL FÜR EXTRUDIERTE WABENPLATTEN, UND GESTELL MIT DOPPELTER EXTRUDIERTER WABENPLATTE
PROFILE FOR MOUNTING EXTRUDED HONEYCOMB PLATES AND RACK WITH DOUBLE EXTRUDED HONEYCOMB PLATE

(30) Priorité: 23.05.2016 FR 1654577
(43) Date de publication de la demande: 29.11.2017
(73) Titulaire: DS SMITH PLASTICS FRANCE, 68240 Kaysersberg (FR)
(72) Inventeur: COSTE, Jean-Philippe, 68240 Kaysersberg (FR); PORRET, Laurent, 68250 Pfaffenheim (FR)
(74) Mandataire: Gevers & Orès

(56) Documents cités:
- EP-A2- 1 126 093
- WO-A1-2008/125938
- DE-U1- 8 616 591
- FR-A1- 2 920 810
- FR-A1- 2 957 102
- GB-A- 2 504 986
- US-A- 4 998 395
- US-A1- 2013 287 489
- US-A1- 2015 308 183

## Description

### DOMAINE TECHNIQUE

La présente invention concerne un profilé de montage de plaques alvéolaires extrudées ainsi qu'une baie à double plaque alvéolaire extrudée (aussi appelé « à double peau »), avant et après son montage.

### ETAT DE L'ART

L'état de l'art comprend notamment les documents EP-A1-0 741 215, FR-A1-2 843 984, EP-A2-1 743 986, FR-A1-2 976 843, qui décrivent des plaques alvéolaires extrudées en particulier en matériau thermoplastique tel qu'en polyoléfine, polycarbonate ou autre résine.

La fabrication de ce type de plaques alvéolaires est en soi bien connue. Ces plaques sont constituées de deux films extérieurs parallèles entre eux, formant des couvertures, reliés entre eux par des parois orientées selon une même direction perpendiculaire aux couvertures et formant des entretoises. Celles-ci définissent des canaux ou alvéoles. Ces structures peuvent également comprendre des parois internes, par exemple parallèles aux couvertures, pour en améliorer le caractère isolant, ainsi que des parois inclinées en diagonales pour en augmenter la rigidité. Elles sont fabriquées par extrusion d'une matière thermoplastique à travers une filière dont les ouvertures sont définies par la structure de plaque à obtenir, suivie du passage entre des parois de calibrage contre lesquelles les couvertures sont maintenues appliquées par aspiration pendant le refroidissement. L'écartement des parois définit l'épaisseur de la plaque.

Une plaque alvéolaire est en général associée à au moins un profilé pour pouvoir maintenir la plaque dans une position souhaitée et la fixer, par exemple dans un encadrement d'une ouverture afin de définir une baie.

En termes de profilés de montage, on peut citer le document WO 2008 125938 A1, qui divulgue un profilé de montage de rails pour une baie, qui comporte les caractéristiques techniques du préambule de la revendication 1.

Dans la présente demande, on entend par « baie », un ensemble d'au moins une plaque alvéolaire et d'au moins un profilé de montage. Cette baie peut être montée dans un encadrement d'une ouverture ou sur cet encadrement. Elle peut comprendre une partie fixe et une partie mobile et définir par exemple une porte, une fenêtre, un élément de toiture, etc.

Dans la technique actuelle, un profilé de montage d'une plaque alvéolaire a une forme allongée et comprend une portion longitudinale à section transversale sensiblement en U définissant un logement longitudinal configuré pour recevoir un bord périphérique d'une plaque. Chaque côté de l'encadrement peut recevoir un profilé de ce type. Les profilés s'étendent alors sur tout le pourtour de la plaque dont les bords périphériques sont engagés dans les logements des profilés.

On a déjà proposé de superposer deux plaques alvéolaires pour augmenter les propriétés d'isolation thermique d'une baie. Une solution consiste alors à utiliser deux jeux de profilés, tous identiques. Un premier jeu de profilés est utilisé pour monter une plaque, par exemple arrière, et un second jeu de profilés est utilisé pour monter l'autre plaque, par exemple avant. Dans la présente demande, on entend par exemple par avant, le côté situé vers l'extérieur d'un bâtiment et par arrière le côté situé vers l'intérieur d'un bâtiment.

La solution évoquée ci-dessus n'est toutefois pas optimale car elle entraîne des opérations longues et fastidieuses de pose des plaques. Par ailleurs, elle ne permet pas de répondre avec précision aux exigences en matière d'étanchéité, de résistance ou de réaction, en particulier au feu, de ce type d'assemblage. En effet, pour la résistance d'un tel assemblage, une lame d'air est nécessaire entre les plaques superposées. Dans la technique actuelle, les montages proposés ne permettent pas de garantir une lame d'air entre les plaques de dimension (épaisseur) suffisante pour conférer à l'assemblage une réaction au feu.

Par ailleurs, cette configuration à double peau risque d'augmenter la rétention d'eau de condensation entre les plaques où de l'air est en général présent.

La présente invention propose une solution à au moins une partie des problèmes évoqués ci-dessus.

### EXPOSE DE L'INVENTION

L'invention propose à cet effet un profilé de montage de plaques alvéolaires extrudées, selon la revendication 1.

L'invention permet ainsi de garantir avec précision une distance minimale et prédéterminée entre les portions avant et arrière du profilé, c'est-à-dire entre les plaques avant et arrière destinées à être reçues dans les logements de ces profilés.

Le profilé selon l'invention peut comprendre une ou plusieurs des caractéristiques suivantes, prises isolément les unes des autres ou en combinaison les unes avec les autres :
- ladite portion intermédiaire s'étend entre au moins un rebord longitudinal arrière de ladite portion avant et au moins un rebord longitudinal avant de ladite portion arrière ;
- ladite portion intermédiaire comprend au moins une paroi longitudinale sensiblement perpendiculaire auxdits rebords ;
- ladite portion intermédiaire comprend deux ou trois parois longitudinales sensiblement perpendiculaires auxdits rebords ;
- ladite paroi longitudinale ou l'une desdites parois longitudinales forme sensiblement un U en section transversale avec lesdits rebords ;
- ladite paroi longitudinale ou l'une desdites parois longitudinales forme sensiblement un H en section transversale avec deux rebords longitudinaux arrière, respectivement supérieur et inférieur, de la portion avant, et deux rebords longitudinaux avant, respectivement supérieur et inférieur, de la portion arrière ;
- la portion arrière comprend au moins une cavité tubulaire longitudinale ;
- ladite cavité tubulaire longitudinale a en section transversale une forme sensiblement rectangulaire, carré ou trapézoïdale ;
- ladite portion arrière comprend ladite au moins une cavité au voisinage de son extrémité arrière ;
- le profilé comprend des orifices de passage de fluide, tel que d'eau de condensation ;
- lesdits orifices sont localisés sur au moins un desdits rebords et/ou ladite paroi ou au moins l'une desdites parois ; et
- lesdits orifices sont localisés sur au moins une des parois de ladite au moins une cavité ;
- ladite distance transversale est par exemple supérieure ou égale à 10mm, de préférence supérieure ou égale à 20mm, plus préférentiellement supérieure ou égale à 30mm et encore plus préférentiellement supérieure ou égale à 40mm voire 50mm.

La présente invention concerne également une baie à double plaque alvéolaire extrudée, comportant au moins un profilé tel que décrit ci-dessus, au moins une plaque alvéolaire extrudée avant comportant un bord périphérique engagé dans le premier logement défini par ladite portion avant, et au moins une plaque alvéolaire extrudée arrière comportant un bord périphérique engagé dans le second logement défini par ladite portion arrière.

La baie selon l'invention peut comprendre une ou plusieurs des caractéristiques suivantes, prises isolément les unes des autres ou en combinaison les unes avec les autres :
- ladite distance transversale est configurée pour conférer à ladite baie des propriétés de réaction au feu (par exemple conformément au classement de la réaction au feu selon la norme EN 13501), et est par exemple supérieure ou égale à 10mm, de préférence supérieure ou égale à 20mm, plus préférentiellement supérieure ou égale à 30mm, plus préférentiellement supérieure ou égale à 40mm et encore plus préférentiellement supérieure ou égale à 50mm ;
- ledit au moins un insert longitudinal est monté entre ladite au moins une plaque alvéolaire extrudée avant et ladite au moins une plaque alvéolaire extrudée arrière, ledit insert comportant des moyens d'accrochage respectifs sur lesdites plaques et comportant une forme asymétrique en section transversale ;
- ledit insert comprend une portion médiane à section transversale sensiblement en forme de H et dont les branches latérales ont des largeurs ou dimensions transversales différentes ;
- ledit insert comprend sur chacune desdites branches latérales une patte longitudinale d'accrochage à des plaques, ladite patte d'accrochage ayant en section transversale une forme sensiblement en T ;
- ledit insert définit deux rainures longitudinales et coplanaires configurées pour recevoir des bords longitudinaux adjacents d'une couche intermédiaire destinée à être intercalée entre ladite au moins un plaque avant et ladite au moins une plaque arrière ; et
- chaque plaque a une masse surfacique supérieure à 3kg/m².

La présente invention concerne encore une baie montée à double plaque alvéolaire extrudée, comportant une baie telle que décrite ci-dessus, qui est fixée sur ou autour d'un encadrement d'ouverture, ladite baie étant orientée sensiblement verticalement ou étant inclinée par rapport à une verticale, par exemple jusqu'à 30° voire au-delà par exemple 40°. L'angle d'inclinaison de la baie est par exemple compris entre 5 et 75°, de préférence entre 10 et 50°, et plus préférentiellement compris entre 30 et 40°.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique d'une baie comportant un ensemble de plaques alvéolaires extrudées et de profilés de montage,
- la figure 2 est une vue schématique de côté d'une plaque alvéolaire extrudée,
- les figures 3a et 3b sont des vues schématiques en coupe transversale de profilés, respectivement de montage et de finition, selon la technique antérieure,
- les figures 4a à 4c sont des vues schématiques en coupe transversale d'une baie et illustrent des étapes de montage de cette baie,
- les figures 5a et 5b sont des vues schématiques en coupe transversale de baies de la technique antérieure, respectivement verticale et inclinée en position montée,
- les figures 6a et 6b sont des vues schématiques en coupe transversale de profilés, respectivement de montage et de finition, selon un premier mode de réalisation de l'invention,
- les figures 7a et 7b sont des vues schématiques en coupe transversale de profilés, respectivement de montage et de finition, selon un second mode de réalisation de l'invention,
- la figure 8a est une vue schématique en coupe transversale d'un profilé de montage selon un troisième mode de réalisation de l'invention, et illustre ce profilé dans une position montée sensiblement verticale,
- la figure 8b est une vue schématique en coupe transversale d'un profilé de montage selon le troisième mode de réalisation de l'invention, et illustre ce profilé dans une position montée inclinée par rapport à la verticale,
- la figure 9 est une vue schématique en coupe transversale d'une baie selon l'invention,
- les figures 10a et 10b sont des vues schématiques respectivement de côté et de face d'un crochet de fixation des plaques de la baie de la figure 9,
- la figure 11 est une vue schématique de face d'une variante de réalisation d'un crochet de fixation des plaques de la baie de la figure 9,
- la figure 12 est une vue schématique à plus grande échelle d'une partie de la figure 9 et montre le crochet de fixation des figures 10a et 10b en position montée,
- la figure 13a est une vue schématique d'un insert longitudinal de maintien des plaques de la baie de la figure 9, et
- la figure 13b est une vue schématique à plus grande échelle d'une partie de la figure 9 et montre l'insert de la figure 13a en position montée.

### DESCRIPTION DETAILLEE

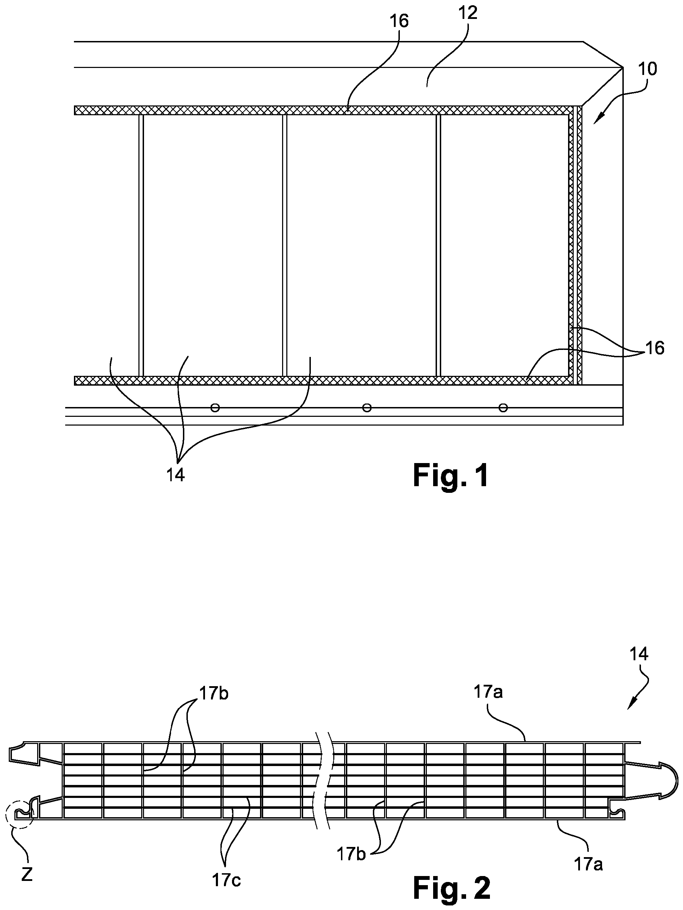

La figure 1 représente une baie 10, c'est-à-dire un ensemble composé d'au moins une plaque alvéolaire extrudée et d'au moins un profilé de montage.

Dans l'exemple représenté, la baie 10 est disposée dans un encadrement 12 et forme une fenêtre, qui est ici fixe. La baie comprend plusieurs plaques alvéolaires extrudées 14 du type de celle représentée à la figure 2, qui sont coplanaires et disposées les unes à côté des autres. Elles sont disposées selon une rangée horizontale dans l'exemple représenté. La rangée de plaques 14 est entourée par des profilés de montage 16. Il y a ici quatre profilés ou ensemble de profilés : un profilé (horizontal) supérieur, un profilé (horizontal) inférieur, et deux profilés latéraux respectivement droite et gauche (seul le profilé droit étant ici représenté).

Les plaques 14 ont leurs bords périphériques supérieurs engagés dans le profilé supérieur qui peut être composé de plusieurs profilés disposés les uns derrière les autres. Les plaques 14 ont leurs bords périphériques inférieurs engagés dans le profilé inférieur ou les profilés inférieurs. La plaque 14 située la plus à droite a son bord périphérique droit qui est engagé dans le profilé latéral droit et la plaque située la plus à gauche a son bord périphérique gauche qui est engagé dans le profilé latéral gauche. Les bords latéraux en regard de deux plaques adjacentes sont en général emboîtés les uns dans les autres.

La figure 2 montre un exemple de plaque alvéolaire 14 extrudée, qui est en général réalisée en matériau thermoplastique tel qu'en polycarbonate.

La plaque 14 comprend deux films extérieurs parallèles entre eux, formant des couvertures 17a, reliés entre eux par des parois orientées selon une même direction perpendiculaire aux couvertures 17a et formant des entretoises 17b. Celles-ci définissent des canaux ou alvéoles. La plaque peut également contenir des parois internes 17c, par exemple parallèles aux couvertures, pour en améliorer le caractère isolant, ainsi que des parois inclinées en diagonales pour en augmenter la rigidité (non représentées).

Les plaques sont emboîtables ou clippables. Par emboîtement, on entend la coopération par engagement d'au moins une partie mâle dans au moins une partie femelle. Par clippable, on comprend un mode d'assemblage des plaques les uns aux autres le long de leurs bords qui sont profilés avec des formes complémentaires pour constituer un raccord avec pincement élastique de l'un sur l'autre. Ces plaques permettent un assemblage facile et rapide pour réaliser, par exemple, des cloisons, des couvertures de toitures de bâtiment ou encore des bardages. Les bords complémentaires de la plaque qui sont réalisés lors de son extrusion, présentent, l'un, une partie clippable mâle, et l'autre, une partie complémentaire femelle pour un assemblage par clippage. Par exemple, un bord peut présenter une rainure longitudinale qui coopère avec une languette du bord opposé, les deux comprenant des surfaces d'appui formant contre butées de retenue du raccord.

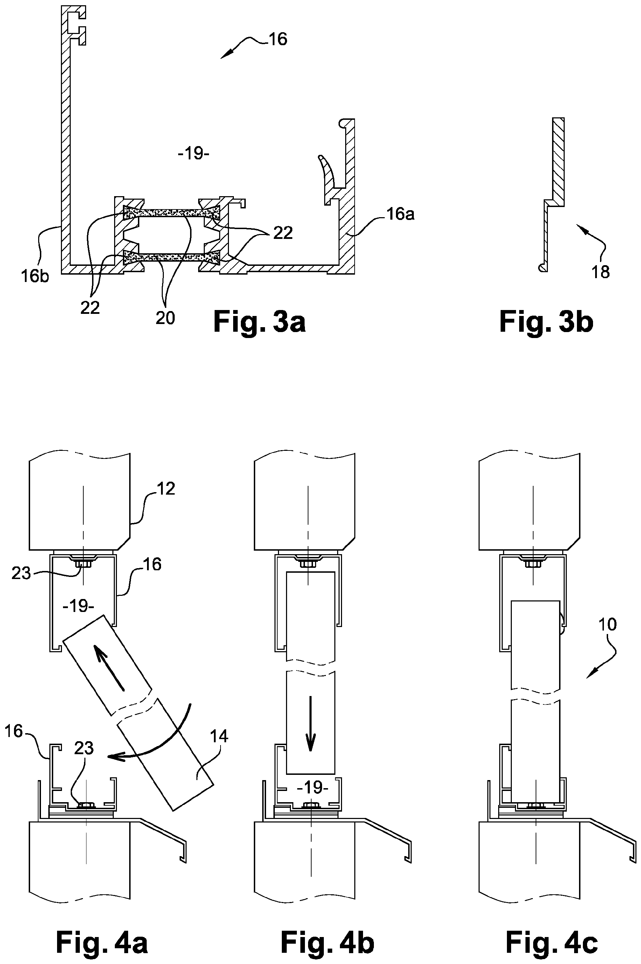

La figure 3a montre un profilé 16 de montage de plaques 14 selon la technique antérieure à la présente invention, et la figure 3b montre un profilé de finition 18 qui peut être associé au profilé 16 pour faciliter le montage et améliorer l'esthétique et l'étanchéité de l'assemblage. Les produits actuels sont complexes à assembler et nécessitent de nombreux accessoires de montage à fixer. La présente invention permet un assemblage simple avec le profilé de finition, qui est un élément amovible, doté d'un joint d'étanchéité. Cette simplicité d'assemblage garantit l'étanchéité à l'eau de pluie notamment.

Le profilé 16 a une forme allongée et a globalement en section transversale une forme sensiblement en U dont l'ouverture définit un logement longitudinal 19 de réception d'un bord périphérique d'une plaque 14 ou de bords périphériques alignés de plaques coplanaires.

Le profilé 16 est ici réalisé en deux parties longitudinales, respectivement avant 16a et arrière 16b, qui sont reliées ensemble par des entretoises longitudinales 20.

Les entretoises 20 sont au nombre de deux et sont ici superposées et à distance l'une de l'autre. Elles sont chacune formées d'une tige plate de forme allongée et dont les bords longitudinaux, orientées respectivement vers l'avant et vers l'arrière, sont engagés et retenus par coopération de formes dans des rainures 22 des parties avant 16a et arrière 16b du profilé 16.

La partie avant 16a a en section transversale une forme sensiblement en U dont la branche arrière comprend les rainures 22 précitées sur sa face arrière, et dont la branche avant est destinée à supporter le profilé de finition 18.

La partie arrière 16b a une forme similaire. Sa branche avant comprend les rainures 22 précitées sur sa face avant. La branche arrière de la partie 16b peut porter un joint d'étanchéité destiné à coopérer par appui avec une face arrière de la ou des plaques 14 insérées dans le logement 19.

Le profilé de finition 18 est rapporté et fixé de manière amovible sur la branche avant de la partie avant 16a et est destiné à coopérer, par exemple par l'intermédiaire d'un joint d'étanchéité, avec une face avant de la ou des plaques 14. Ce profilé 18 est monté entre la face avant de la ou des plaques 14 et la branche avant de la partie 16a du profilé de montage 16, et est de préférence doté d'un joint d'étanchéité qui prend appui sur les plaques par exemple. Ce joint d'étanchéité s'étend le long d'un bord longitudinal du profilé de montage et est porté par ce bord. Au montage, il est pincé entre ce bord et les plaques.

Dans la présente description, l'avant peut être considéré comme l'extérieur d'un bâtiment et l'arrière comme l'intérieur de ce bâtiment. Naturellement, les plaques et les baies décrites peuvent être utilisées à l'intérieur d'un bâtiment et peuvent séparer deux pièces internes du bâtiment.

Les figures 4a à 4c montrent des étapes de montage d'une plaque 14 entre des profilés supérieur et inférieur 16 qui sont fixés dans un encadrement 12. Les profilés 16 sont ici fixés à l'intérieur de l'encadrement au moyen de vis 23, les profilés étant appliqués contre les bords sensiblement horizontaux de l'encadrement. Les profilés 16 sont ici destinés à être alignés verticalement l'un vis-à-vis de l'autre de façon à ce que les plaques s'étendent sensiblement verticalement entre les profilés. Comme évoqué dans ce qui précède, la baie ainsi formée pourrait en outre comprendre des profilés latéraux, également coplanaires avec les profilés supérieur et inférieur.

Les plaques 14 sont montées les unes après les autres, entre les profilés 16. Une première étape de montage consiste à incliner la plaque 14 à poser et à insérer son bord périphérique supérieur dans le logement 19 précité du profilé supérieur (figure 4a). La plaque est alors redressée pour adopter une position sensiblement verticale dans laquelle son bord périphérique inférieur est aligné verticalement avec le profilé inférieur (figure 4b). La plaque 14 est alors déplacée verticalement vers le profilé inférieur, jusqu'à ce que son bord périphérique inférieur s'engage dans le logement 19 du profilé inférieur (figure 4c). Dans le cas où la baie comporte plusieurs plaques coplanaires, la première plaque est déplacée en coulissement sur un côté de la baie jusqu'à ce que l'un de ses bords périphériques latéraux s'engagent dans le profilé latéral correspondant, puis la ou les autres plaques sont montées à leur tour, les unes après les autres, de la même façon.

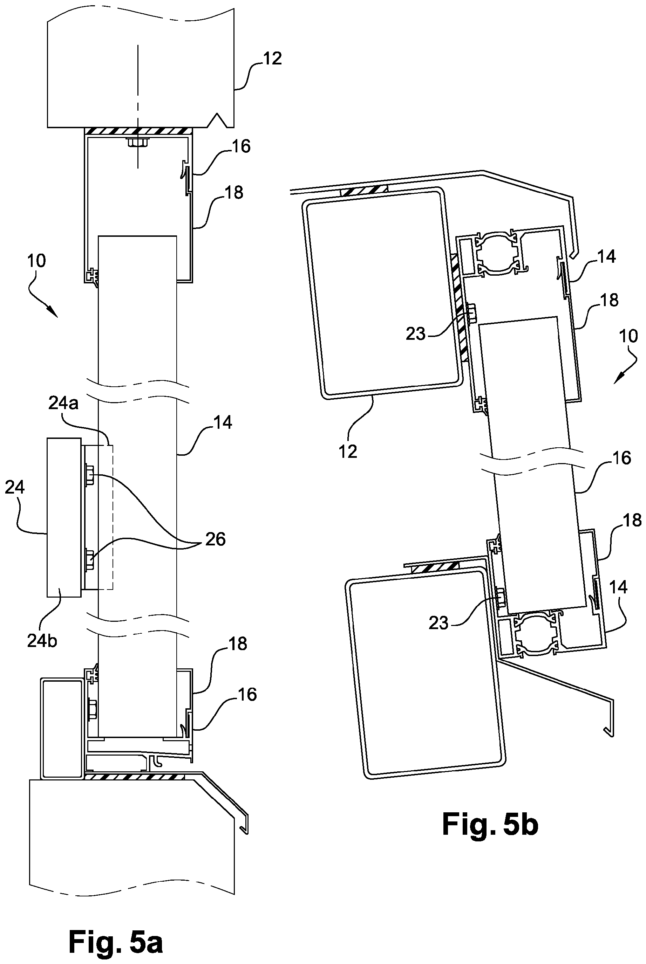

La figure 5a montre une baie selon la technique antérieure. La baie 10 est ici sensiblement verticale en position montée. Des crochets de fixation 24 peuvent être utilisés pour maintenir fixement les plaques 14 en position. C'est notamment le cas lorsque les plaques sont très longues ou hautes (longueur d'extrusion importante). Les crochets permettent de diviser la hauteur et donc la résistance au vent ou à la neige par exemple, garantissant une courbure de la plaque amoindrie sur sa surface globale.

Chaque crochet 24 comprend une extrémité 24a engagée entre les bords latéraux en regard de deux plaques adjacentes, dans la zone Z représentée à la figure 2, et une patte de fixation 24b destinée à être appliquée sur une partie fixe du bâtiment et comportant des orifices traversés par des vis de fixation 26.

La figure 5b montre une autre baie 10 selon la technique antérieure. La baie est ici inclinée par rapport à la verticale en position montée. Les profilés 16 sont ici fixés à l'extérieur de l'encadrement au moyen de vis 23, les profilés étant appliqués contre une face, par exemple externe, de l'encadrement 12. Les profilés 16 sont ici destinés à être alignés dans un plan incliné de façon à ce que les plaques 14 s'étendent sensiblement dans ce plan incliné entre les profilés.

Dans la technique actuelle, pour former une baie à double paroi, c'est-à-dire à deux (rangées de) parois superposées, la solution la plus simple mais qui n'est pas entièrement satisfaisante consiste simplement à agencer deux baies du type de celles des figures 5a et 5b, l'une derrière l'autre.

La présente invention permet de faciliter la pose de ce type de baie à double plaque et apporte plusieurs avantages, notamment en termes d'étanchéité et de sécurité en particulier au feu.

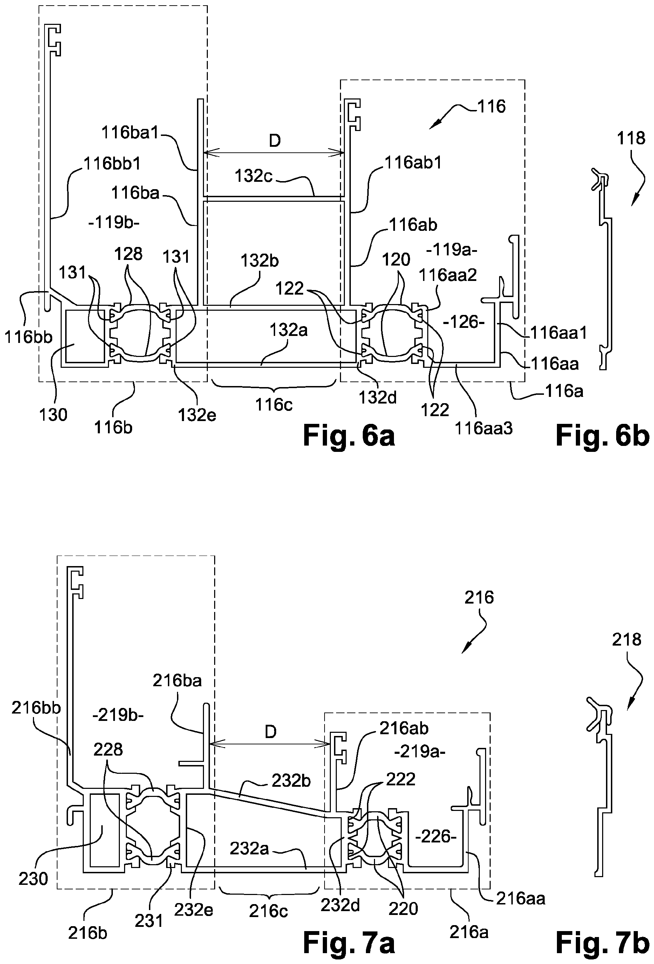

La figure 6a montre un premier exemple de réalisation d'un profilé de montage 116 selon l'invention.

Le profilé 116 comprend :
- une portion longitudinale avant 116a à section transversale sensiblement en U définissant un premier logement longitudinal 119a configuré pour recevoir un bord périphérique d'une première plaque 14,
- une portion longitudinale arrière 116b à section transversale sensiblement en U définissant un second logement longitudinal 119b configuré pour recevoir un bord périphérique d'une seconde plaque 14, et
- une portion longitudinale intermédiaire 116c qui relie les portions 116a, 116b et dont la dimension transversale est prédéterminée et définit une distance transversale D séparant les portions 116a, 116b.

La portion avant 116a comprend deux parties longitudinales respectivement avant 116aa et arrière 116ab. Ces deux parties 116aa, 116ab sont reliées ensemble par des entretoises longitudinales 120.

Les entretoises 120 sont au nombre de deux et sont ici superposées et à distance l'une de l'autre. Elles sont chacune formées d'une tige plate de forme allongée et dont les bords longitudinaux, orientées respectivement vers l'avant et vers l'arrière, sont engagés et retenus par coopération de formes dans des rainures 122 des parties avant 116aa et arrière 116ab.

La partie avant 116aa a en section transversale une forme sensiblement en U ou L et comprend une branche avant 116aa1 et une branche arrière 116aa2 reliées au niveau de leurs bords longitudinaux inférieurs par une paroi longitudinale médiane 116aa3. La branche arrière 116aa2, la paroi médiane 116aa3 et une partie inférieure de la branche avant 116aa1 définissent une cavité tubulaire longitudinale 126 qui est ici ouverte dans sa partie supérieure. Les branches 116aa1, 116aa2 sont sensiblement parallèles et perpendiculaire à la paroi 116aa3.

La branche arrière 116aa2 comprend les rainures 122 précitées sur sa face arrière. La partie supérieure de la branche avant 116aa1 comprend des moyens de fixation d'un profilé de finition 118 équipé d'un joint d'étanchéité, représenté à la figure 6b.

La portion arrière 116b comprend deux parties longitudinales respectivement avant 116ba et arrière 116bb. Ces deux parties 116ba, 116bb sont reliées ensemble par des entretoises longitudinales 128.

Les entretoises 128 sont au nombre de deux et sont ici superposées et à distance l'une de l'autre. Elles sont chacune formées d'une tige plate de forme allongée et dont les bords longitudinaux, orientées respectivement vers l'avant et vers l'arrière, sont engagés et retenus par coopération de formes dans des rainures 131 des parties avant 116ba et arrière 116bb.

La partie arrière 116bb a en section transversale une forme sensiblement en L et comprend une branche arrière 116bb1 dont l'extrémité supérieure comprend des moyens de fixation ou de support d'un joint d'étanchéité non représenté.

La branche arrière 116bb1 est reliée à son extrémité inférieure à des parois définissant une cavité tubulaire longitudinale 130 qui est ici fermée sur ses différents côtés. La cavité 130 est ici définie par quatre parois formant un parallélépipède de forme allongée. Plus précisément, elle est définie par quatre parois, respectivement inférieure, supérieure, et latérales. La paroi latérale avant de la cavité comprend sur sa face avant les rainures 131 précitées. Les parois latérales de la cavité 130 sont sensiblement parallèles entre elles et perpendiculaires aux parois supérieure et inférieure de la cavité 130.

L'ensemble formé par la portion intermédiaire 116c, la partie arrière 116ab de la portion avant 116a, et la partie avant 116ba de la portion arrière 116b, forment sensiblement un T inversé en section transversale, comme le montre la figure 6a.

Les parties 116ab et 116ba sont ici reliées ensemble par trois parois longitudinales 132a, 132b, 132c sensiblement parallèles entre elles et à une direction transversale. Les parois 132a-132c sont superposées et à distance les unes des autres. La portion 116c du profilé 116 est ainsi formée par ces trois parois 132a-132c dans l'exemple représenté.

Les parois inférieure 132c et intermédiaire 132b définissent la barre horizontale (ici inférieure) du T inversé précité. Leurs bords longitudinaux avant sont reliés ensemble par une paroi longitudinale avant 132d dont la face avant comprend les autres rainures 122 de réception des entretoises 120. Leurs bords longitudinaux arrière sont reliés ensemble par une paroi longitudinale arrière 132e dont la face arrière comprend les autres rainures 131 de réception des entretoises 128.

La partie arrière 116ab de la portion avant 116a comprend la paroi 132d et une branche 116ab1 qui s'étend vers le haut depuis la paroi intermédiaire 132b, au voisinage de la paroi 132d. La partie avant 116ba de la portion arrière comprend la paroi 132e et une branche 116ba1 qui s'étend vers le haut depuis la paroi intermédiaire 132b, au voisinage de la paroi 132e. Les branches 116ab1, 116ba1 sont parallèles et à distance transversale D l'une de l'autre.

Les branches 116ab1, 116ba1 sont reliées ensemble sensiblement en leur milieu, par la paroi supérieure 132c. La paroi supérieure 132c a une dimension transversale prédéterminée, qui est égale à la distance D précitée souhaitée entre les branches 116ab1, 116ba1, et donc entre les portions 116a, 116b ou les plaques 14.

La distance D est par exemple supérieure ou égale à 10mm, de préférence supérieure ou égale à 20mm, plus préférentiellement supérieure ou égale à 30mm et encore plus préférentiellement supérieure ou égale à 40mm voire 50mm.

Les parois 132b, 132c et les branches 116ab1, 116ba1 définissent un espace fermé. Les parois 132a, 132b, 132d, 132e définissent un espace fermé.

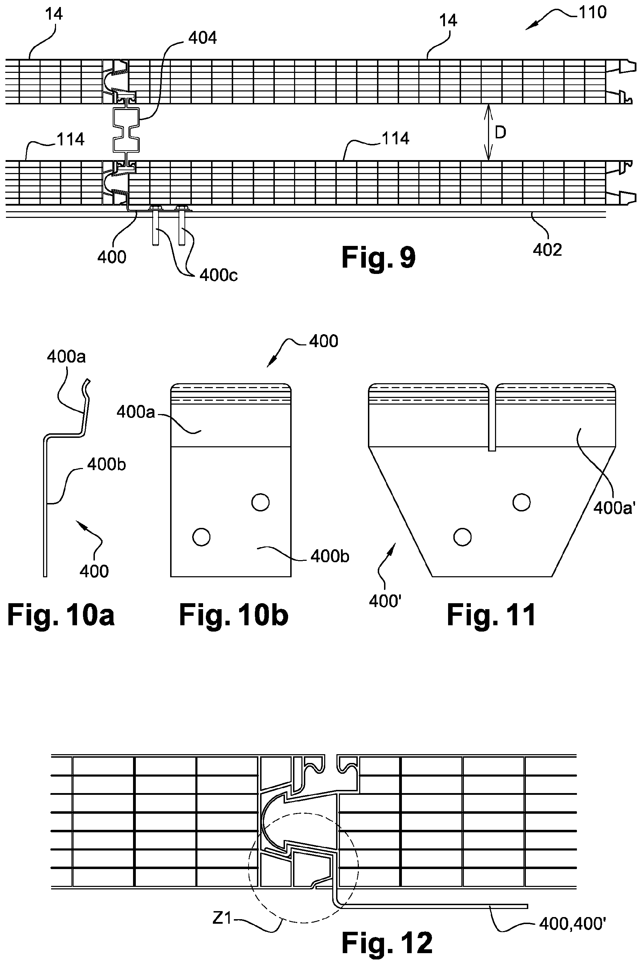

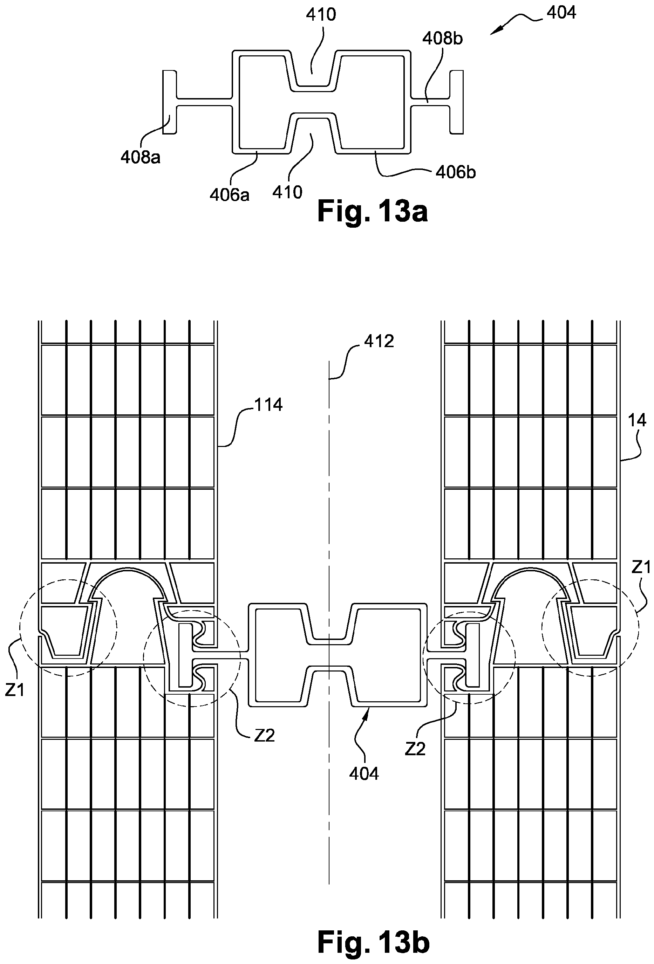

Les branches 116ab1, 116aa1 de la portion avant 116a définissent un logement 119a ouvert vers le haut et destiné à recevoir un bord périphérique d'une plaque 14, comme évoqué dans ce qui précède. Les branches 116ba1, 116bb1 de la portion arrière 116b définissent un logement 119b ouvert vers le haut et destiné à recevoir un bord périphérique d'une autre plaque 114 (la référence est visible aux figures 9 et 13b), disposée donc dans un plan parallèle et à distance du plan de la plaque 14. Les branches 116ab1, 116ba1 définissent entre elles un espace de dimension transversale D. Lorsque cette distance D est suffisante, elle permet de conférer à une baie des propriétés de réaction en particulier au feu (classement de la réaction au feu selon la norme EN 13501, par exemple).

Le profilé de finition 118 est rapporté et fixé de manière amovible sur la branche avant 116aa1 de la partie avant 116a et est destiné à coopérer, par exemple par l'intermédiaire d'un joint d'étanchéité, avec une face avant de la plaque 14. Ce profilé 118 est maintenu en place par insertion en force entre la face avant de la plaque 14 et la branche avant 116aa1 de la partie avant 116a.

Les figures 7a et 7b illustrent une variante de réalisation de l'invention.

Cette variante diffère du précédent mode de réalisation notamment par la structure de l'ensemble formé par la portion intermédiaire 216c, la partie arrière 216ab de la portion avant 216a, et la partie avant 216ba de la portion arrière 216b, qui forme également ici un T inversé en section transversale, comme le montre la figure 7a.

Les parties 216ab et 216ba sont ici reliées ensemble par deux parois longitudinales 232a, 232b sensiblement parallèles entre elles et à une direction transversale. Les parois 232a, 232b sont superposées et à distance l'une de l'autre. La portion 216c du profilé 216 est ainsi formée par ces deux parois 232a, 232b dans l'exemple représenté.

Les parois inférieure et supérieure 232c, 232b définissent la barre horizontale (ici inférieure) du T inversé précité. Leurs bords longitudinaux avant sont reliés ensemble par une paroi longitudinale avant 232d dont la face avant comprend des rainures 222 de réception des entretoises 220. Leurs bords longitudinaux arrière sont reliés ensemble par une paroi longitudinale arrière 232e dont la face arrière comprend des rainures 231 de réception des entretoises 228. La paroi 232d a une hauteur inférieure à celle de la paroi 232e. La hauteur de la paroi 232d est sensiblement égale à celle de la cavité avant 226 et la hauteur de la paroi 232e est sensiblement égale à celle de la cavité arrière 230.

La partie arrière 216ab de la portion avant 216a comprend la paroi 232d et une branche 216ab1 qui s'étend vers le haut depuis la paroi supérieure 232b, au voisinage de la paroi 232d. La partie avant 216ba de la portion arrière 216b comprend la paroi 232e et une branche 216ba1 qui s'étend vers le haut depuis la paroi supérieure 232b, au voisinage de la paroi 232e. Les branches 216ab1, 216ba1 sont parallèles et à distance transversale D l'une de l'autre.

La paroi supérieure 232b a une dimension transversale prédéterminée, qui est égale à la distance D précitée souhaitée entre les branches 232d, 232e.

Les parois 232a, 232b, 232d, 232e définissent un espace fermé. Les branches 216aa1, 216ab1 de la portion avant 216a définissent un logement 219a ouvert vers le haut et destiné à recevoir un bord périphérique d'une plaque 14, comme évoqué dans ce qui précède. Les branches 216ba1, 216bb1 de la portion arrière 216b définissent un logement 219b ouvert vers le haut et destiné à recevoir un bord périphérique d'une autre plaque 114, disposée donc dans un plan parallèle et à distance du plan de la plaque 114. Les branches 216ab1, 216ba1 définissent entre elles un espace de dimension transversale D. Lorsque cette distance est suffisante, elle permet de conférer à une baie des propriétés de réaction en particulier au feu.

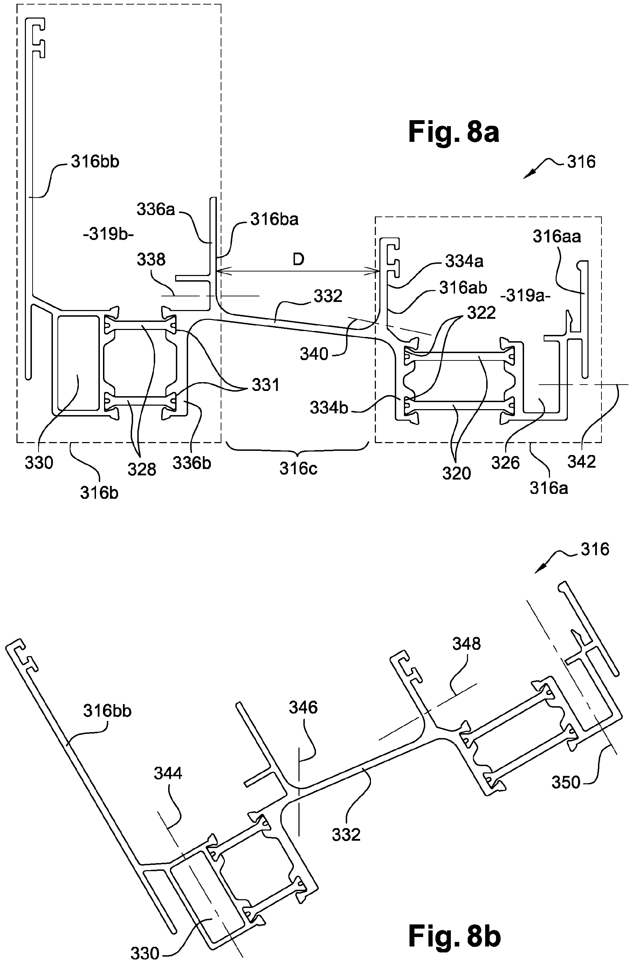

La figure 8a illustre une autre variante de réalisation de l'invention.

Cette variante diffère du premier mode de réalisation notamment par la structure de l'ensemble formé par la portion intermédiaire 316c, la partie arrière 316ab de la portion avant 316a, et la partie avant 316ba de la portion arrière 316b, qui forme ici un H en section transversale.

Les parties 316ab et 316ba sont ici reliées ensemble par une unique paroi longitudinale 332. La portion 316c du profilé 316 est ainsi formée par cette unique paroi 332 dans l'exemple représenté.

La paroi 332 définit la barre horizontale du H inversé précité. Son bord longitudinal avant est relié à deux rebords longitudinaux, respectivement supérieur 334a et inférieur 334b, formant la partie arrière 316ab de la portion avant 316a. Son bord longitudinal arrière est relié à deux rebords longitudinaux, respectivement supérieur 336a et inférieur 336b, formant la partie arrière 316ba de la portion avant 316b.

La face avant du rebord inférieur 334b comprend des rainures 322 de réception des entretoises 320. La face arrière du rebord inférieur 336b comprend des rainures 331 de réception des entretoises 328. Le rebord 334b a une hauteur sensiblement égale à celle de la cavité avant 326 et la hauteur du rebord 336b est sensiblement égale à celle de la cavité arrière 330.

La paroi 332 est ici inclinée par rapport aux rebords 334a, 334b 336a, 336b et n'est donc pas perpendiculaire à ces derniers. L'angle d'inclinaison de la paroi 232 et sa largeur permet de déduire la distance D entre les rebords supérieurs 334a, 336a.

Les branches 316aa, 316ab de la portion avant 316a définissent un logement 319a ouvert vers le haut et destiné à recevoir un bord périphérique d'une plaque 14, comme évoqué dans ce qui précède. Les branches 316ba, 316bb de la portion arrière 316b définissent un logement 319b ouvert vers le haut et destiné à recevoir un bord périphérique d'une autre plaque 114, disposée donc dans un plan parallèle et à distance du plan de la plaque 114. Les branches 334a, 336a définissent entre elles un espace de dimension transversale D. Lorsque cette distance D est suffisante, elle permet de conférer à une baie des propriétés de résistance ou réaction en particulier au feu.

La figure 8a illustre une position montée, ici verticale, du profilé 316 et de la baie associée, et montre schématiquement des positions d'orifices 338, 340, 342 ou d'ouvertures d'évacuation par écoulement d'eau de condensation.

Dans l'exemple représenté, le rebord supérieur arrière 336a comprend au voisinage de son extrémité inférieure, c'est-à-dire au voisinage de la paroi 332, une rangée longitudinale d'orifices 338. Le rebord supérieur arrière 334a comprend au voisinage de son extrémité inférieure, c'est-à-dire au voisinage de la paroi 332, une rangée longitudinale d'orifices 340. Les orifices 338 sont sensiblement horizontaux et les orifices 340 sont inclinés, de préférence parallèlement à la paroi 332. La paroi avant de la cavité avant 326 comprend en outre une rangée longitudinale d'orifices 342, ici sensiblement horizontaux.

De l'eau de condensation peut ainsi s'écouler à travers les orifices 338, le long de la paroi 332, à travers les orifices 340, dans la cavité avant 326 puis à travers les orifices 342. La baie étant étanche, de l'eau de pluie ne devrait pas pénétrer dans l'espace inter-plaques et donc s'écouler à travers les orifices.

Le profilé 316 de la figure 8a peut être utilisé pour être monté sur les bords inférieurs d'une rangée de plaques. L'inclinaison de la paroi 332 facilite ainsi l'écoulement de l'eau entre les orifices 338, 340. Naturellement, le profilé supérieur, monté sur les bords supérieurs des plaques, pourrait ne pas comprendre d'orifices du type précité. Sa paroi 332 pourrait en outre être sensiblement perpendiculaire aux branches 316ab, 316ba.

La figure 8b illustre une autre position montée, ici inclinée par exemple d'un angle d'environ 30°, du profilé 316 et de la baie associée, et montre schématiquement des positions d'orifices 344, 346, 348, 350 ou d'ouvertures d'évacuation par écoulement d'eau de condensation. Juste 344 en incliné, les autres sont communs.

Dans l'exemple représenté, les parois supérieure et inférieure du logement arrière comprend chacun une série d'orifices 344 alignés et orientés dans une direction sensiblement parallèle à la branche arrière 316bb de la partie arrière 316b. La paroi 332 comprend au voisinage des rebords 336a, 336b une rangée d'orifices 346 sensiblement verticaux. Le rebord supérieur avant 334a comprend au voisinage de son extrémité inférieure, c'est-à-dire au voisinage de la paroi 332, une rangée longitudinale d'orifices 348, qui sont sensiblement parallèles à la paroi 332 ou perpendiculaires à la branche arrière 316bb. La paroi inférieure de la cavité avant 326 peut en outre comprendre une rangée d'orifices 350 sensiblement parallèles à la branche arrière 316bb.

De l'eau de condensation peut d'une part s'écouler à travers les orifices 348, le long de la paroi 332, puis à travers les orifices 346, et d'autre part dans la cavité 330 à travers les orifices 344 ou à travers les orifices 350.

Comme indiqué dans ce qui précède en relation avec la figure 8a, le profilé 316 de la figure 8b peut être un profilé inférieur d'une baie, son profilé supérieur étant dépourvu d'orifices et sa paroi 332 étant sensiblement perpendiculaire aux branches 316ab, 316ba.

La figure 9 montre des plaques 14 d'une baie 110 selon l'invention. Bien que les profilés ne soient pas visibles, cette baie comprend des profilés tels que ceux décrits dans ce qui précède en référence aux figures 7a à 8b.

La baie 110 comprend ici une série de plaques 14 dont les bords périphériques sont montés dans les logements 119a, 219a, 319a de profilés 116, 216 ou 316, et une série de plaques 114 dont les bords périphériques sont montés dans les logements 119b, 219b, 319b de ces profilés, de la même façon que décrit précédemment, notamment en référence aux figures 1 et suivantes.

On voit que les plaques 14 ont leurs bords latéraux en regard emboîtés les uns dans les autres. C'est la même chose pour les plaques 114. Les plaques, ici arrière 114, sont fixées par l'intermédiaire de crochets de fixation 400 sur une partie fixe d'un encadrement 402. Les plaques 14, 114 sont en outre maintenues à distance D les unes des autres par des inserts longitudinaux 404, qui ont ici en section transversale une forme sensiblement en H. Ces inserts s'étendent le long des bords longitudinaux emboîtés de deux plaques adjacentes.

Des crochets de fixation 400, 400' sont mieux visibles aux figures 10a, 10b, 11 et 12, et l'insert 404 est mieux visible aux figures 13a et 13b. Les crochets de fixation et l'insert ne forment pas des variantes de l'invention mais peuvent être utilisés dans une baie selon l'invention.

Les figures 10a et 10b représentent un premier mode de réalisation d'un crochet de fixation 400. Le crochet 400 comprend une extrémité 400a engagée entre les bords latéraux en regard de deux plaques adjacentes 114, dans la zone Z1 représentée à la figure 12, et une patte de fixation 400b destinée à être appliquée sur une partie fixe du bâtiment et comportant des orifices traversés par des vis de fixation 400c. On notera que la zone Z1 est différente de celle Z de la figure 2.

La figure 11 représente une variante de réalisation du crochet de fixation 400'. L'extrémité 400a' comprend ici deux parties d'engagement distinctes contre une seule pour l'extrémité 400a du crochet 400.

L'insert longitudinal 404 comporte des moyens d'accrochage respectifs sur les plaques 14, 114 et a ici une forme asymétrique en section transversale. Il comprend une portion médiane à section transversale sensiblement en forme de H et dont les jambes latérales 406a, 406b ont des largeurs ou dimensions transversales différentes.

L'insert 404 comprend sur chacune desdites jambes latérales 406a, 406b une patte longitudinale 408a, 408b d'accrochage aux plaques 14, 114. Chaque patte d'accrochage a en section transversale une forme sensiblement en T couché.

L'insert 404 définit deux rainures longitudinales 410 configurées pour recevoir des bords longitudinaux adjacents d'une couche intermédiaire destinée à être intercalée entre les plaques 14, 114. Cette couche est schématiquement représentée par des traits pointillés 412 en figure 13b. Il peut par exemple s'agir d'une plaque en polyester armé de fibres de verre ou un tissu de fibre de verre.

Les pattes 404 sont engagées entre les bords latéraux en regard de deux plaques adjacentes 14, 114, dans la zone Z2 correspondant à la zone Z de la figure 2. On voit sur la figure 13b que la zone Z2 des plaques est en regard de la zone Z2 des plaques 114, ce qui signifie que les plaques 14 sont inversées par rapport aux plaques 114. Les inserts ont de faibles dimensions transversales et restent dans la zone d'emboîtement des plaques, ce qui minimise les zones d'ombres et procure ainsi un effet optique amélioré par rapport à des inserts plus encombrants.

La présente invention propose ainsi un perfectionnement pour la pose d'un doublage de plaques alvéolaires extrudées, qui permet de conférer à l'assemblage de bonnes propriétés thermiques, mécaniques et de réaction au feu. Des tests satisfaisants de réaction au feu ont été réalisés par les inventeurs avec le profilé selon l'invention (classement de la réaction au feu selon la norme EN 13501, par exemple).

## Revendications

1. Profilé (116, 216, 316) de montage de plaques alvéolaires (14, 114) extrudées, comportant :
- une portion longitudinale avant (116a, 216a, 316a) à section transversale sensiblement en U définissant un premier logement longitudinal (119a, 219a, 319a) configuré pour recevoir un bord périphérique d'une première plaque (14),
- une portion longitudinale arrière (116b, 216b, 316b) à section transversale sensiblement en U définissant un second logement longitudinal (119b, 219b, 319b) configuré pour recevoir un bord périphérique d'une seconde plaque (114),
dans lequel lesdites portions avant et arrière sont à distance transversale (D) l'une de l'autre et sont reliées l'une à l'autre par une portion longitudinale intermédiaire (116c, 216c, 316c) dont la dimension transversale est prédéterminée et définit ladite distance transversale entre lesdites portions avant et arrière ;
dans lequel lesdites portions avant et arrière (116a, 116b, 216a, 216b, 316a, 316b) comprennent chacune deux parties indépendantes, respectivement avant (116aa, 116ba, 216aa, 216ba, 316aa, 316ba) et arrière (116ab, 116bb, 216ab, 216bb, 316ab, 316bb), reliées entre elles par des entretoises (120, 130, 220, 230, 320, 330) de rupture de ponts thermiques ;
dans lequel la partie avant (116ba, 216ba, 316ba) de la portion arrière (116b, 216b, 316b) et la partie arrière (116ab, 216ab, 316ab) de la portion avant (116a, 216a, 316a) sont formées d'une seule pièce avec ladite portion intermédiaire (116c, 216c, 316c) ;
**caractérisé en ce que** la partie avant (116aa, 216aa, 316aa) de la portion avant a en section transversale une forme sensiblement en U et comprend une branche avant (116aa1) et une branche arrière (116aa2) présentant chacune un bord longitudinal inférieur, le bord longitudinal inférieur de la branche avant étant relié au bord longitudinal inférieur de la branche arrière par une paroi longitudinale médiane (116aa3) ;
et dans lequel la branche arrière (116aa2), la paroi longitudinale médiane (116aa3) et une partie inférieure de la branche avant (116aa1) définissent une cavité tubulaire longitudinale (126, 226, 326) ouverte dans sa partie supérieure.

2. Profilé (116, 216, 316) selon la revendication précédente, dans lequel ladite portion intermédiaire (116c, 216c, 316c) s'étend entre au moins un rebord longitudinal arrière de ladite portion avant (116a, 216a, 316a) et au moins un rebord longitudinal avant de ladite portion arrière (116b, 216b, 316b).

3. Profilé (116, 216, 316) selon la revendication précédente, dans lequel ladite portion intermédiaire (116c, 216c, 316c) comprend au moins une paroi longitudinale (132a-132c, 232a-232b, 332) sensiblement perpendiculaire auxdits rebords.

4. Profilé (116, 216, 316) selon la revendication précédente, dans lequel ladite portion intermédiaire (116c, 216c, 316c) comprend deux ou trois parois longitudinales (132a-132c, 232a-232b, 332) sensiblement perpendiculaires auxdits rebords.

5. Profilé (116, 216) selon la revendication 3 ou 4, dans lequel ladite paroi longitudinale ou l'une desdites parois longitudinales (132a-132c, 232a-232b) forme sensiblement un U en section transversale avec lesdits rebords.

6. Profilé (116, 216, 316) selon l'une des revendications précédentes, dans lequel la portion arrière (116a, 216a, 316a) comprend au moins une cavité tubulaire longitudinale (130, 230, 330).

7. Profilé (116, 216, 316) selon la revendication 6, dans lequel ladite portion arrière (116a, 216a, 316a) comprend ladite au moins une cavité (130, 230, 330) au voisinage de son extrémité arrière.

8. Profilé (116, 216, 316) selon l'une des revendications précédentes, dans lequel il comprend des orifices (338-342, 344-348) de passage de fluide, tel que d'eau de condensation.

9. Baie (110) à double plaque alvéolaire extrudée, comportant au moins un profilé (116, 216, 316) selon l'une des revendications précédentes, au moins une plaque alvéolaire extrudée avant (14) comportant un bord périphérique engagé dans le premier logement (119a, 219a, 319a) défini par ladite portion avant (116a, 216a, 316a), et au moins une plaque alvéolaire extrudée arrière (114) comportant un bord périphérique engagé dans le second logement (119b, 219b, 319b) défini par ladite portion arrière (116b, 216b, 316b).

10. Baie (110) selon la revendication précédente, dans lequel ladite distance transversale (D) est configurée pour conférer à ladite baie des propriétés de réaction au feu, et est par exemple comprise entre 5 et 75mm.

11. Baie (110) selon la revendication 9 ou 10, dans lequel au moins un insert longitudinal (404) est monté entre ladite au moins une plaque alvéolaire extrudée avant (14) et ladite au moins une plaque alvéolaire extrudée arrière (14), ledit insert comportant des moyens d'accrochage respectifs sur lesdites plaques et comportant une forme asymétrique en section transversale.

12. Baie (110) selon la revendication précédente, dans lequel ledit insert (404) comprend une portion médiane à section transversale sensiblement en forme de H et dont les branches latérales (406a, 406b) ont des largeurs ou dimensions transversales différentes.

13. Baie (110) selon la revendication précédente, dans lequel ledit insert (404) comprend sur chacune desdites branches latérales une patte longitudinale (408a, 408b) d'accrochage à des plaques (14, 114), ladite patte d'accrochage ayant en section transversale une forme sensiblement en T.

14. Baie (110) selon l'une des revendications 11 à 13, dans lequel ledit insert définit deux rainures longitudinales (410) et coplanaires configurées pour recevoir des bords longitudinaux adjacents d'une couche intermédiaire (412) destinée à être intercalée entre ladite au moins un plaque avant (14) et ladite au moins une plaque arrière (114).

15. Baie (110) montée à double plaque alvéolaire extrudée, comportant une baie selon l'une des revendications 9 à 14, qui est fixée sur ou autour d'un encadrement (12) d'ouverture, ladite baie étant orientée sensiblement verticalement ou étant inclinée par rapport à une verticale, par exemple jusqu'à 30° voire 40°.

## Patentansprüche

1. Montageprofil (116, 216, 316) für extrudierte Wabenplatten (14, 114), Folgendes beinhaltend:
- einen vorderen Längsabschnitt (116a, 216a, 316a) mit im Wesentlichen U-förmigem Querschnitt, eine erste Längsaufnahme (119a, 219a, 319a) definierend, die konfiguriert ist, um einen Umfangsrand einer ersten Platte (14) aufzunehmen,
- einen hinteren Längsabschnitt (116b, 216b, 316b) mit im Wesentlichen U-förmigem Querschnitt, eine zweite Längsaufnahme (119b, 219b, 319b) definierend, die konfiguriert ist, um einen Umfangsrand einer zweiten Platte (114) aufzunehmen,
wobei der vordere und hintere Abschnitt in einem Querabstand (D) zueinander sind und durch einen intermediären Längsabschnitt (116c, 216c, 316c) miteinander verbunden sind, dessen Querabmessung vorbestimmt ist und den Querabstand zwischen dem vorderen und hinteren Abschnitt definiert;
wobei der vordere und hintere Abschnitt (116a, 116b, 216a, 216b, 316a, 316b) jeweils zwei unabhängige Teile umfasst, respektive vorne (116aa, 116ba, 216aa, 216ba, 316aa, 316ba) und hinten (116ab, 116bb, 216ab, 216bb, 316ab, 316bb), die durch Abstandhalter (120, 130, 220, 230, 320, 330) zur Unterbrechung thermischen Brücken untereinander verbunden sind;
wobei der vordere Teil (116ba, 216ba, 316ba) des hinteren Abschnitts (116b, 216b, 316b) und der hintere Teil (116ab, 216ab, 316ab) des vorderen Abschnitts (116a, 216a, 316a) aus einem einzigen Stück mit dem intermediären Abschnitt (116c, 216c, 316c) gebildet sind;
**dadurch gekennzeichnet, dass** der vordere Teil (116aa, 216aa, 316aa) des vorderen Abschnitts im Querschnitt eine im Wesentlichen U-förmige Form besitzt und einen vorderen Zweig (116aa1) und einen hinteren Zweig (116aa2) umfasst, die jeweils einen unteren Längsrand aufweisen, wobei der untere Längsrand des vorderen Zweigs mit dem unteren Längsrand des hinteren Zweigs durch eine mittlere Längswand (116aa3) verbunden ist;
und wobei der hintere Zweig (116aa2), die mittlere Längswand (116aa3) und ein unterer Teil des vorderen Zweigs (116aa1) einen länglichen rohrförmigen Hohlraum (126, 226, 326) definieren, der in seinem oberen Teil offen ist.

2. Profil (116, 216, 316) nach dem vorstehenden Anspruch, wobei der intermediäre Abschnitt (116c, 216c, 316c) sich zwischen mindestens einer hinteren Längskante des vorderen Abschnitts (116a, 216a, 316a) und mindestens einer vorderen Längskante des hinteren Abschnitts (116b, 216b, 316b) erstreckt.

3. Profil (116, 216, 316) nach dem vorstehenden Anspruch, wobei der intermediäre Abschnitt (116c, 216c, 316c) mindestens eine Längswand (132a-132c, 232a-232b, 332) umfasst, die im Wesentlichen senkrecht zu den Kanten ist.

4. Profil (116, 216, 316) nach dem vorstehenden Anspruch, wobei der intermediäre Abschnitt (116c, 216c, 316c) zwei oder drei Längswände (132a-132c, 232a-232b, 332) umfasst, die im Wesentlichen senkrecht zu den Kanten sind.

5. Profil (116, 216) nach Anspruch 3 oder 4, wobei die Längswand oder die eine der Längswände (132a-132c, 232a-232b) im Querschnitt im Wesentlichen ein U mit den Kanten bildet.

6. Profil (116, 216, 316) nach einem der vorstehenden Ansprüche, wobei der hintere Abschnitt (116a, 216a, 316a) mindestens einen länglichen rohrförmigen Hohlraum (130, 230, 330) umfasst.

7. Profil (116, 216, 316) nach Anspruch 6, wobei der hintere Abschnitt (116a, 216a, 316a) den mindestens einen Hohlraum (130, 230, 330) in der Nähe seines hinteren Endes umfasst.

8. Profil (116, 216, 316) nach einem der vorstehenden Ansprüche, wobei es Öffnungen (338-342, 344-348) zum Durchgang eines Fluids wie beispielsweise Kondensationswasser umfasst.

9. Gestell (110) mit doppelter extrudierter Wabenplatte, mindestens ein Profil (116, 216, 316) nach einem der vorstehenden Ansprüche beinhaltend, mindestens eine vordere extrudierte Wabenplatte (14), einen Umfangsrand beinhaltend, der die erste Aufnahme (119a, 219a, 319a) in Eingriff nimmt, die durch den vorderen Abschnitt (116a, 216a, 316a) definiert ist, und mindestens eine hintere extrudierte Wabenplatte (114), einen Umfangsrand beinhaltend, der die zweite Aufnahme (119b, 219b, 319b) in Eingriff nimmt, die durch den hinteren Abschnitt (116b, 216b, 316b) definiert ist.

10. Gestell (110) nach dem vorstehenden Anspruch, wobei der Querabstand (D) konfiguriert ist, um dem Gestell Brandverhaltenseigenschaften zu verleihen und zum Beispiel zwischen 5 und 75 mm umfasst ist.

11. Gestell (110) nach Anspruch 9 oder 10, wobei mindestens ein Längseinsatz (404) zwischen der mindestens einen vorderen extrudierten Wabenplatte (14) und der mindestens einen hinteren extrudierten Wabenplatte (14) montiert ist, wobei der Einsatz Mittel zum jeweiligen Befestigen auf den Platten beinhaltet und im Querschnitt eine asymmetrische Form beinhaltet.

12. Gestell (110) nach dem vorstehenden Anspruch, wobei der Einsatz (404) einen mittleren Einsatz mit im Wesentlichen H-förmigem Querschnitt umfasst und dessen Seitenzweige (406a, 406b) unterschiedliche Breiten oder Querschnittsabmessungen besitzen.

13. Gestell (110) nach dem vorstehenden Anspruch, wobei der Einsatz (404) auf jedem der Seitenzweige eine Längslasche (408a, 408b) zum Befestigen an Platten (14, 114) umfasst, wobei die Lasche zum Befestigen im Querschnitt eine im Wesentlichen T-förmige Form besitzt.

14. Gestell (110) nach einem der Ansprüche 11 bis 13, wobei der Einsatz zwei koplanare und längliche Nuten (410) definiert, die konfiguriert sind, um angrenzende Längsränder einer intermediären Schicht (412) aufzunehmen, die dazu bestimmt ist, zwischen der mindestens einen vorderen Platte (14) und der mindestens einen hinteren Platte (114) eingefügt zu werden.

15. Montiertes Gestell (110) mit doppelter extrudierter Wabenplatte, ein Gestell nach einem der Ansprüche 9 bis 14 beinhaltend, das auf oder um einen Öffnungsumrahmen (12) fixiert ist, wobei das Gestell im Wesentlichen vertikal ausgerichtet ist oder in Bezug auf eine Vertikale, zum Beispiel bis zu 30°, sogar 40°, geneigt ist.

## Claims

1. Profile (116, 216, 316) for mounting extruded honeycomb plates (14, 114), comprising:
- a front longitudinal portion (116a, 216a, 316a) with a substantially U-shaped transversal cross-section defining a first longitudinal housing (119a, 219a, 319a) configured to receive a peripheral edge of a first plate (14),
- a rear longitudinal portion (116b, 216b, 316b) with a substantially U-shaped transversal cross-section defining a second longitudinal housing (119b, 219b, 319b) configured to receive a peripheral edge of a second plate (114),
wherein said front and rear portions are at a transversal distance (D) from one another and connected to one another by an intermediate longitudinal portion (116c, 216c, 316c) with a predetermined transversal dimension defining said transversal distance between said front and rear portions;
wherein said front and rear portions (116a, 116b, 216a, 216b, 316a, 316b) each comprise two independent parts, respectively a front part (116aa, 116ba, 216aa, 216ba, 316aa, 316ba) and a rear part (116ab, 116bb, 216ab, 216bb, 316ab, 316bb), connected to one another by crosspieces (120, 130, 220, 230, 320, 330) provided to break the thermal bridging;
wherein the front part (116ba, 216ba, 316ba) of the rear portion (116b, 216b, 316b) and the rear part (116ab, 216ab, 316ab) of the front portion (116a, 216a, 316a) are made of one single part with said intermediate portion (116c, 216c, 316c);
**characterised in that** the front part (116aa, 216aa, 316aa) of the front portion has a substantially U-shaped transversal cross-section and comprises a front branch (116aa1) and a rear branch (116aa2) each having a lower longitudinal edge, the lower longitudinal edge of the front branch being connected to the lower longitudinal edge of the rear branch by a median longitudinal wall (116aa3);
and wherein the rear branch (116aa2), the median longitudinal wall (116aa3) and a lower part of the front branch (116aa1) define a longitudinal tubular cavity (126, 226, 326) that is open in the top part thereof.

2. Profile (116, 216, 316) according to the preceding claim, wherein said intermediate portion (116c, 216c, 316c) extends between at least one rear longitudinal ledge of said front portion (116a, 216a, 316a) and at least one front longitudinal ledge of said rear portion (116b, 216b, 316b).

3. Profile (116, 216, 316) according to the preceding claim, wherein said intermediate portion (116c, 216c, 316c) comprises at least one longitudinal wall (132a-132c, 232a-232b, 332) that is substantially perpendicular to said ledges.

4. Profile (116, 216, 316) according to the preceding claim, wherein said intermediate portion (116c, 216c, 316c) comprises two or three longitudinal walls (132a-132c, 232a-232b, 332) that are substantially perpendicular to said ledges.

5. Profile (116, 216) according to claim 3 or 4, wherein said longitudinal wall or one of said longitudinal walls (132a-132c, 232a-232b) forms a substantially U-shaped transversal cross-section with said ledges.

6. Profile (116, 216, 316) according to one of the preceding claims, wherein the rear portion (116a, 216a, 316a) comprises at least one longitudinal tubular cavity (130, 230, 330).

7. Profile (116, 216, 316) according to claim 6, wherein said rear portion (116a, 216a, 316a) comprises said at least one cavity (130, 230, 330) in the vicinity of the rear end thereof.

8. Profile (116, 216, 316) according to one of the preceding claims, wherein it comprises orifices (338-342, 344-348) for the passage of a fluid, such as condensation water.

9. Bay (110) with double extruded honeycomb plate, comprising at least one profile (116, 216, 316) according to one of the preceding claims, at least one front extruded honeycomb plate (14) comprising a peripheral edge engaged in the first housing (119a, 219a, 319a) defined by said front portion (116a, 216a, 316a), and at least one rear extruded honeycomb plate (114) comprising a peripheral edge engaged in the second housing (119b, 219b, 319b) defined by said rear portion (116b, 216b, 316b).

10. Bay (110) according to the preceding claim, wherein said transversal distance (D) is configured to provide said bay with fire reaction properties, and ranges for example from 5 to 75mm.

11. Bay (110) according to claim 9 or 10, wherein at least one longitudinal insert (404) is mounted between said at least one front extruded honeycomb plate (14) and said at least one rear extruded honeycomb plate (14) said insert comprising respective means for hooking onto said plates and comprising, along a transversal cross-section, an asymmetrical shape.

12. Bay (110) according to the preceding claim, wherein said insert (404) comprises a median portion with a substantially H-shaped transversal cross-section and of which the side branches (406a, 406b) have different widths or transversal dimensions.

13. Bay (110) according to the preceding claim, wherein said insert (404) comprises, on each of said side branches, a longitudinal tab (408a, 408b) for attaching to plates, (14, 114), said attachment tab being substantially T-shaped along a transversal cross-section.

14. Bay (110) according to one of claims 11 to 13, wherein said insert defines two longitudinal and coplanar grooves (410) configured to receive the adjacent longitudinal edges of an intermediate layer (412) intended to be inserted between said at least one front plate (14) and said at least one rear plate (114).

15. Mounted bay (110) with double extruded honeycomb plate, comprising a bay according to one of claims 9 to 14, which is attached on or around a frame (12) of an opening, said bay being oriented substantially vertically or being inclined with respect to a vertical line, for example at an angle of 30°, even 40°.
